# EUROPÄISCHE PATENTANMELDUNG

(11) **EP 4 699 795 A1**
(43) Veröffentlichungstag der Anmeldung: **25.02.2026**
(21) Anmeldenummer: 25186495.5
(22) Anmeldetag: 01.07.2025
(51) Int. Cl.: B29D 30/06, B33Y 80/00, B60C 11/12

(54) **EINSATZELEMENT ZUR HERSTELLUNG EINES LAUFSTREIFENPROFILS EINES FAHRZEUGREIFENS, SOWIE FAHRZEUGREIFEN, DER MIT DEM EINSATZELEMENT HERGESTELLT IST**

(30) Priorität: 19.08.2024 DE 102024207874
(71) Anmelder: Continental Reifen Deutschland GmbH, 30175 Hannover (DE)
(72) Erfinder: Karow, Malte, 30175 Hannover (DE); Bauer, Claudia, 30175 Hannover (DE); Wiese, Klaus, 30175 Hannover (DE)
(74) Vertreter: Continental Corporation

(57) **Zusammenfassung**

Die vorliegende Erfindung betrifft ein Einsatzelement (10) zur Herstellung eines Laufstreifenprofils eines Fahrzeugreifens in einer Vulkanisierstation, wobei das Einsatzelement (10) mit einem SLM (Selective Laser Manufacturing)-Verfahren hergestellt ist. Das Einsatzelement (10) beinhaltet ein Lamellenelement (12) für die Erzeugung eines Einschnitts, insbesondere eines Feineinschnitts, in dem Laufstreifenprofil und ein Oberflächenelement (14), wobei das Oberflächenelement (14) eine erste Seite (22) mit einer rauen Oberfläche zur Erzeugung einer Rauigkeit des Laufstreifenprofils aufweist.

## Beschreibung

Die vorliegende Erfindung betrifft ein Einsatzelement für eine Herstellung eines Laufstreifenprofils eines Fahrzeugreifens in einer Vulkanisierstation, wobei das Einsatzelement mit einem SLM (Selective Laser Manufacturing)-Verfahren hergestellt ist. Der Fahrzeugreifen ist insbesondere ein Winterreifen oder ein Ganzjahresreifen.

Die US 2016 / 0 016 371 A1 offenbart eine Reifenvulkanisierungsform für eine Vulkanisierstation, wobei die Reifenvulkanisierungsform ein Formsegment besitzt, auf dem ein Einsatzelement montiert ist. Das Formsegment ist ein Metallelement, das durch ein konventionelles Druckguss-Gießverfahren hergestellt ist. Das Einsatzelement ist ein Metallelement, das durch ein automatisiertes additives (Rapid Prototyping) Verfahren unter Verwendung eines Lasers schichtweise hergestellt ist.

Die US 2011 / 0 304 082 A1 offenbart ein Einsatzelement, das durch ein Lasersinter-Verfahren hergestellt ist und das eine Vielzahl von Strukturelementen aufweist. Das Einsatzelement ist dazu bestimmt, an einer Metallbasisform einer Reifenvulkanisierungsform angefügt zu werden. Die Strukturelemente sind dazu bestimmt, ein Laufstreifenprofil eines Teils eines Laufstreifens eines Fahrzeugreifens zu formen. Das Einsatzelement enthält außerdem mindestens ein Verbindungselement zur Verbindung der Strukturelemente miteinander. Die Strukturelemente und das Verbindungselement sind aus einem Stück hergestellt.

Die US 2018 / 0 200 974 A1 offenbart ein Einsatzelement, das in einer Reifenvulkanisierungsform zum Vulkanisieren von Fahrzeugreifen angebracht wird, wobei das Einsatzelement die Form einer Haut mit einer Dicke zwischen 0,25 mm und 6 mm hat und eine Auflagefläche mit einer gegenüberliegenden Formfläche aufweist, die eine gesamte oder einen Teil einer Außenfläche des Fahrzeugreifens bilden soll. Das Einsatzelement umfasst ein Profil, das eine Vielzahl von vertieften oder hervorstehenden Elementen umfasst, die als integrale Teile des Einsatzelements ausgebildet sind. Jedes Formelement wird zusammen mit der Vielzahl von Elementen in einem Stück hergestellt, vorzugsweise unter Verwendung eines Lasersinter-Verfahrens.

Winterreifen sind für niedrige Temperaturen und winterliche Straßenverhältnisse ausgelegt und verfügen über eine Gummimischung, die auch bei niedrigen Temperaturen ausreichend elastisch ist, um eine hinreichende Kraftübertragung auf eine Straße zu erreichen. Es ist bekannt, dass Mikrostrukturen auf einer Oberfläche des Laufstreifens, wie feine Einschnitte in der Größenordnung von 0,1 mm - 0,3 mm und raue Oberflächen mit Mittenrauwerten (Sa-Werten) von 5 µm bis 50 µm eine Kraftübertragung auf vereisten Straßen verbessern. Dies gilt insbesondere für Bedingungen, bei denen eine Traktion generell sehr gering ist: bei Eis und Temperaturen nahe 0°C. Um diese gewünschten Mikrostrukturen jedoch auf den Laufstreifen zu bekommen, müssen sie in einem Formenherstellungsprozess berücksichtigt werden. Bisher werden die verwendeten Reifenvulkanisierungsformen meist in einem Gießverfahren hergestellt, basierend auf gebohrten oder gefrästen Modellen. Diese Modelle müssen in einem zusätzlichen Herstellungsschritt beschichtet werden, um eine raue Oberfläche zu erzielen. Lamellen zur Herstellung von Einschnitten werden typischerweise mit einem Lasersinter-Verfahren gedruckt, beispielsweise durch ein SLM-Verfahren, und in ein Formsegment einer Vulkanisierstation eingefügt.

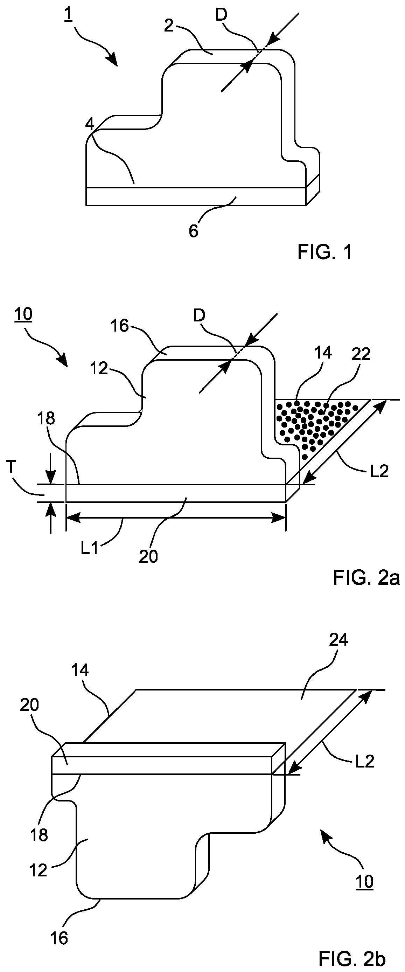

In der Fig. 1 ist in einer seitlichen Ansicht schematisch ein Lamellenelement 1 dargestellt, das für eine Herstellung von einem Laufstreifenprofil eines Fahrzeugreifens verwendbar ist, insbesondere für eine Herstellung von einem Feineinschnitt in einem Laufstreifenprofil eines Winterreifens. Das Lamellenelement 1 besitzt eine Dicke D von 0,4 mm - 1,0 mm und weist eine Lamellenunterseite 2 und eine Lamellenoberseite 4 auf. An der Lamellenoberseite 4 befindet sich eine Lamellenbasis 6, mit der das Lamellenelement 1 an einem Formsegment einer Vulkanisierstation befestigt werden kann. Das Lamellenelement 1 ist beispielsweise unter Verwendung eines SLM-Verfahrens hergestellt.

Das Lamellenelement 1 ist für eine Herstellung eines Laufstreifenprofils eines Fahrzeugreifens, insbesondere eines Winterreifens oder eines Ganzjahresreifens, in einer Vulkanisierstation verwendbar. Die Vulkanisierstation besitzt einen Innenraum, in den ein Reifenrohling eingebracht wird, zwei seitliche Formteile und mehrere periphere Formsegmente, wie beispielsweise in der US 2011 / 0 304 082 A1 beschrieben. Die seitliche Formteile formen hierbei in einem Vulkanisierungsprozess die seitlichen, äußeren Oberflächen des Fahrzeugreifens, und die peripheren Formsegmente formen das Laufstreifenprofil des Fahrzeugreifens. Die peripheren Formsegmente weisen eine Innenseite auf, die beispielsweise mit einer Vielzahl von Vertiefungen ausgestaltet sind, in denen Lamellenelemente 1 eingesetzt werden können, um eine Vielzahl von Feineinschnitten in dem Laufstreifenprofil des Fahrzeugreifens zu erzeugen.

Es ist eine Aufgabe der vorliegenden Erfindung, ein Einsatzelement für eine kostengünstige Herstellung eines Laufstreifenprofils eines Fahrzeugreifens in einer Vulkanisierstation bereitzustellen, sowie einen Fahrzeugreifen, der mit einem solchen Einsatzelement hergestellt ist.

Diese Aufgabe wird durch ein Einsatzelement mit den Merkmalen des Anspruchs 1 und einen Fahrzeugreifen mit den Merkmalen des Anspruchs 15 gelöst.

Bevorzugte Ausgestaltungen der Erfindung sind Gegenstand der abhängigen Ansprüche.

Gemäß einem ersten Aspekt der Erfindung weist das Einsatzelement ein Lamellenelement und ein Oberflächenelement zur Herstellung eines Laufstreifenprofils eines Fahrzeugreifens in einer Vulkanisierstation auf, wobei das Einsatzelement mit einem SLM-Verfahren hergestellt ist. Das Lamellenelement bewirkt eine Erzeugung eines Einschnitts, insbesondere eines Feineinschnitts, in dem Laufstreifenprofil bei der Herstellung des Laufstreifenprofils. Das Oberflächenelement weist eine erste Seite mit einer rauen Oberfläche zur Erzeugung einer Rauigkeit des Laufstreifenprofils auf.

Gemäß einem weiteren Aspekt der Erfindung weist das Lamellenelement eine Lamellenunterseite, eine Lamellenoberseite und eine Lamellenbasis auf, wobei das Oberflächenelement und die Lamellenbasis an der Lamellenoberseite angeordnet sind, und wobei das Lamellenelement mit der Lamellenbasis in eine Vertiefung eines Formsegments der Vulkanisierstation einsetzbar ist.

Gemäß einem weiteren Aspekt der Erfindung weist die zweite Seite eine glatte Oberfläche auf.

Gemäß einem weiteren Aspekt der Erfindung weist die erste Seite des Oberflächenelements einen Bereich auf, der mit einer definierten Rauigkeit ausgestaltet ist, und einen Bereich, der mit einer glatten Oberfläche ausgestaltet ist.

Gemäß einem weiteren Aspekt der Erfindung ist der Bereich mit der glatten Oberfläche zwischen dem Bereich mit der definierten Rauigkeit und der Lamellenoberseite angeordnet.

Gemäß einem weiteren Aspekt der Erfindung sind die zwei Bereiche rechteckförmig ausgestaltet.

Gemäß einem weiteren Aspekt der Erfindung ist die Oberfläche der ersten Seite des Oberflächenelements vollständig mit einer definierten Rauigkeit ausgestaltet.

Gemäß einem weiteren Aspekt der Erfindung weist die Seite des Oberflächenelements einen ersten Bereich auf, der Microeinschnitte aufweist.

Gemäß einem weiteren Aspekt der Erfindung weist die Seite des Oberflächenelements einen zweiten Bereich mit einer definierten Rauigkeit auf.

Gemäß einem weiteren Aspekt der Erfindung sind die zwei Bereiche rechteckförmig ausgestaltet, und der zweite Bereich ist zwischen dem ersten Bereich und der Lamellenoberseite angeordnet.

Gemäß einem weiteren Aspekt der Erfindung weist das Einsatzelement an der Lamellenoberseite eine Verbreiterung auf, durch die mit dem Lamellenelement ein Feineinschnitt mit einer Fase in dem Laufstreifenprofil des Fahrzeugreifens herstellbar ist. Vorzugsweise ist die Verbreiterung in Form einer dreieckförmigen Kante ausgestaltet.

Gemäß einem weiteren Aspekt der Erfindung beinhaltet das Einsatzelement ein zweites Oberflächenelement, das eine erste Seite mit einer rauen Oberfläche aufweist zur Erzeugung einer Rauigkeit des Laufstreifenprofils, und wobei die beiden Oberflächenelemente um 180° gegeneinander an gegenüberliegenden Seiten des Einsatzelements angeordnet sind.

Gemäß einem weiteren Aspekt der Erfindung weist die erste Seite des zweiten Oberflächenelements einen Bereich mit einer glatten Oberfläche und einen Bereich mit einer definierten Rauigkeit auf.

Gemäß einem weiteren Aspekt der Erfindung ist ein Fahrzeugreifen, insbesondere ein Winterreifen oder ein Ganzjahresreifen, mit einem Einsatzelement nach einem der vorhergehenden Ansprüche hergestellt.

Die Erfindung hat den Vorteil, das mit dem Einsatzelement ein Laufstreifenprofil mit sowohl einem Feineinschnitt als auch mit einer rauen Oberfläche in einer Vulkanisierstation hergestellt werden kann. Hierbei können mit dem Einsatzelement Oberflächen mit einer Vielzahl von Ausgestaltungen realisiert werden. Mit dem SLM-Verfahren können Lamellenelemente mit unterschiedlichsten Geometrien, beispielsweise Lamellenelemente mit Lamellenkanten, Fasen, Sägezähne, Schneekanten und/oder Kombinationen von Schneekanten mit Fasen in dem Laufstreifenprofil erzeugt werden, in Kombination mit einer rauen Oberfläche des Laufstreifenprofils, was bei der bestehenden Fertigung eine Herausforderung darstellt. Prozessschritte zum Beschichten von Formsegmenten zur Herstellung von rauen Oberflächen können hierdurch entfallen.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt ein Lamellenelement nach dem Stand der Technik, das für eine Herstellung von einem Laufstreifenprofil eines Winterreifens verwendbar ist;
- Fig. 2a, 2b: zeigen ein erstes Ausführungsbeispiel eines Einsatzelements, das ein Lamellenelement und ein Oberflächenelement aufweist;
- Fig. 3a, 3b: zeigen ein zweites Ausführungsbeispiel eines Einsatzelements, das ein Lamellenelement und zwei Oberflächenelemente aufweist, und
- Fig. 4a, 4b: zeigen ein drittes Ausführungsbeispiel eines Einsatzelements, das ein Lamellenelement und ein Oberflächenelement aufweist.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

In Fig. 2a und Fig. 2b ist jeweils in einer seitlichen Ansicht schematisch ein Einsatzelement 10 dargestellt, das ein Lamellenelement 12 und ein Oberflächenelement 14 aufweist. Das Lamellenelement 12 besitzt eine Lamellenunterseite 16, eine Lamellenoberseite 18 und eine Lamellenbasis 20, wobei das Oberflächenelement 14 und die Lamellenbasis 20 an der Lamellenoberseite 18 angeordnet sind. Die Lamellenbasis 20 besitzt eine Länge L1 und eine Tiefe T, wobei die Länge L1 gleich einer Länge eines Endes des Oberflächenelements 14 ist, der Lamellenoberseite 18, mit der das Oberflächenelement 14 mit der Lamellenbasis 20 in Kontakt ist.

Das Einsatzelement 10 ist für eine Herstellung von einem Laufstreifenprofil eines Fahrzeugreifens, insbesondere eines Winterreifens oder eines Ganzjahresreifens, in einer Vulkanisierstation verwendbar, wobei das Lamellenelement 12 einen Feineinschnitt in dem Laufstreifenprofil des Fahrzeugreifens bei der Herstellung erzeugt. Das Einsatzelement 10 wird hierfür in eine Oberfläche einer Innenseite eines peripheren Formsegments der Vulkanisierstation eingesetzt, mit der das Laufstreifenprofil des Fahrzeugreifens hergestellt wird, wobei das Formsegment eine Vertiefung aufweist, die der Kontur der Lamellenbasis 20 entspricht.

Das Lamellenelement 12 besitzt beispielsweise eine Dicke D von 0,4 mm - 1,0 mm an der Lamellenunterseite 16 und ist zusammen mit dem Oberflächenelement 14 mit einem SLM-Verfahren hergestellt. Das Oberflächenelement 14 weist eine erste Seite 22 auf, die dem Laufstreifen des Fahrzeugreifens zugeordnet ist, und eine zweite Seite 24, die mit der Oberfläche des Formsegments der Vulkanisierstation in Kontakt ist, wenn das Einsatzelement 10 in das Formsegment eingesetzt ist.

Die erste Seite 22 des Oberflächenelements 14 weist eine definierte Rauigkeit auf, die bei der Herstellung des Oberflächenelements 14 erzeugt wird, wenn das Einsatzelement 10 mit dem SLM-Verfahren geformt wird, wobei sich die Rauigkeit in diesem Ausführungsbeispiel über die gesamte Oberfläche der ersten Seite 22 erstreckt. Hierdurch wird bei der Vulkanisierung des Winterreifens die Rauigkeit der ersten Seite 22 auf das Laufstreifenprofil des Winterreifens übertragen. Der Winterreifen erhält hierdurch eine bessere Traktion, insbesondere bei Eis und Schnee. Die zweite Seite 24 weist vorzugsweise eine glatte Oberflächenstruktur auf.

In der Fig. 2b ist das Einsatzelement 10 in einer seitlichen Ansicht um 180° gedreht zu der Ansicht der Fig. 2a, so dass die glatte Oberflächen der zweiten Seite 24 sichtbar ist. Das Oberflächenelement 14 weist vorzugsweise eine rechteckförmige Kontur auf und besitzt eine zweite Länge L2, die abhängig ist von einem Abstand zu einem benachbarten Einsatzelement, wenn das Einsatzelement 10 in die Oberfläche eines Formsegments der Vulkanisierstation der eingesetzt ist, und zu Längsrillen und Querrillen des zu erzeugenden Laufstreifenprofils.

Die Vulkanisierstation besitzt mehrere periphere Formensegmente, wobei jedes Formsegment mit einer Vielzahl von Vertiefungen ausgestaltet ist, in die jeweils ein Einsatzelement 10 einsetzbar ist. In der Vulkanisierstation wird bei der Vulkanisierung des Fahrzeugreifens eine Reifenkarkasse mit einem Laufstreifen verbunden und der Fahrzeugreifen wird durch die peripheren Formensegmente mit einem Laufstreifenprofil ausgeformt, das durch die Verwendung der Einsatzelemente 10 eine Vielzahl von Feineinschnitten und eine Oberfläche mit einer definierten Rauigkeit aufweist.

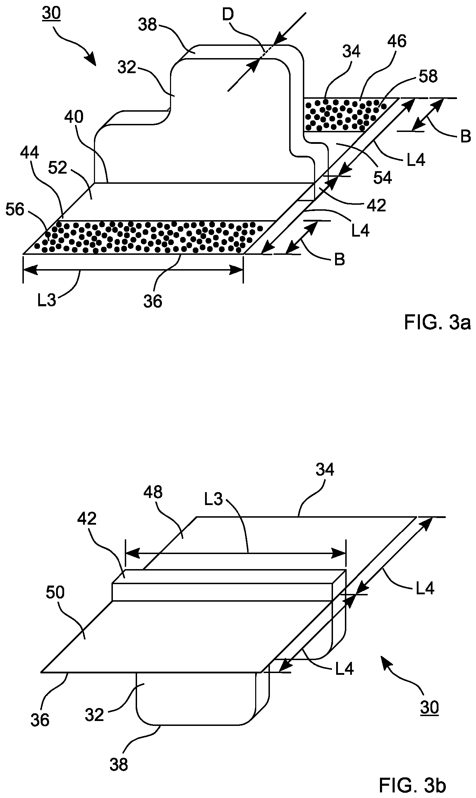

In Fig. 3a und Fig. 3b ist ein zweites Ausführungsbeispiel eines Einsatzelements 30 dargestellt, das ein Lamellenelement 32 und zwei Oberflächenelemente 34, 36 aufweist. Das Lamellenelement 32 besitzt eine Lamellenunterseite 38, eine Lamellenoberseite 40 und eine Lamellenbasis 42, wobei die Lamellenbasis 42 an der Lamellenoberseite 40 angeordnet sind. Die beide Oberflächenelemente 34, 36 sind hierbei um 180° gegeneinander an gegenüberliegenden Seiten der Lamellenoberseite 40 angeordnet und weisen jeweils einen Winkel von 90° zu dem Lamellenelement 32 auf. Das Einsatzelement 30 ist für eine Herstellung von einem Laufstreifenprofil eines Fahrzeugreifens verwendbar, wobei es hierfür mit der Lamellenbasis 42 in eine Vertiefung einer Oberfläche an einer Innenseite eines Formsegments der Vulkanisierstation eingesetzt wird.

In diesem Ausführungsbeispiel besitzt das Lamellenelement 32 eine Dicke D von 0,4 mm - 1,0 mm an der Lamellenunterseite 38 und ist zusammen mit den beiden Oberflächenelementen 34, 36 mit einem SLM-Verfahren hergestellt. Das Oberflächenelement 34 weist eine erste Seite 44 und das Oberflächenelement 36 weist eine erste Seite 46 auf, die jeweils dem Laufstreifen des Fahrzeugreifens zugeordnet sind, wenn das Einsatzelement 10 in das Formsegment eingesetzt ist, und das Oberflächenelement 34 weist eine zweite Seite 48 und das Oberflächenelement 36 weist eine zweite Seite 50 auf, die jeweils mit einer inneren Oberfläche eines Formsegments der Vulkanisierstation in Kontakt sind, wenn das Lamellenelement 32 in das Formsegment eingesetzt ist.

Die ersten Seiten 44, 46 weisen jeweils Bereiche mit einer glatten Oberfläche und jeweils Bereiche mit einer definierten Rauigkeit auf. In diesem Ausführungsbeispiel weisen die ersten Seiten 44, 46 jeweils einen Bereich 52, bzw. 54 mit einer glatten Oberfläche auf und jeweils einen Bereich 56, bzw. 58 mit einer definierten Rauigkeit auf, wobei die Bereiche 52, 54 mit der glatten Oberfläche jeweils zwischen den Bereich 56, bzw. 58 und der Lamellenbasis 42 liegen.

In der Fig. 3b ist das Einsatzelement 30 in einer seitlichen Ansicht, um 180° gedreht zu der Ansicht der Fig. 3a, so dass die glatten Oberflächen der zweiten Seiten 48, 50 sichtbar sind. Die Oberflächenelemente 34, 36 weisen vorzugsweise eine rechteckförmige Kontur auf und besitzen eine erste Länge, die gleich einer Länge L3 der Lamellenbasis 42 ist, und besitzen jeweils eine zweite Länge, hier zwei gleiche Längen L4, die abhängig ist von einem Abstand zu einem benachbarten Einsatzelement, wenn das Einsatzelement 30 in die Oberfläche eines Formsegments der Vulkanisierstation der eingesetzt ist, und zu Längsrillen und Querrillen des zu erzeugenden Laufstreifenprofils. Die Bereiche 56, 58 weisen beispielsweise eine Breite B auf, die in etwa gleich der Hälfte der Länge L4 ist, Fig. 3a.

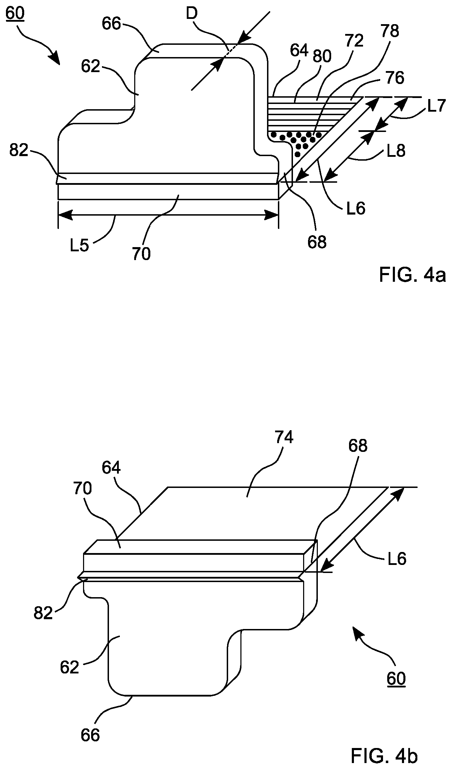

In Fig. 4a und Fig. 4b ist ein drittes Ausführungsbeispiel eines Einsatzelements 60 dargestellt, das ein Lamellenelement 62 und ein Oberflächenelement 64 aufweist. Das Lamellenelement 62 besitzt eine Lamellenunterseite 66, eine Lamellenoberseite 68 und eine Lamellenbasis 70, wobei das Oberflächenelement 64 und die Lamellenbasis 70 an der Lamellenoberseite 68 angeordnet sind. Das Oberflächenelement 64 weist hierbei einen Winkel von 90° zu dem Lamellenelement 62 auf. Das Einsatzelement 60 ist für eine Herstellung von einem Laufstreifenprofil eines Fahrzeugreifens verwendbar, wobei es hierfür mit der Lamellenbasis 70 in eine Vertiefung an einer Innenseite eines Formsegments der Vulkanisierstation einsetzbar ist.

In diesem Ausführungsbeispiel besitzt das Lamellenelement 62 eine Dicke D von 0,4 mm - 1,0 mm an der Lamellenunterseite 66 und ist zusammen mit dem Oberflächenelement 64 mit einem SLM-Verfahren hergestellt. Das Oberflächenelement 64 weist eine erste Seite 72 auf, die dem Laufstreifen des Fahrzeugreifens zugeordnet ist, und weist eine zweite Seite 74 auf, die mit einer Oberfläche eines Formsegments der Vulkanisierstation in Kontakt ist, wenn das Einsatzelement 60 in das Formsegment der Vulkanisierstation eingesetzt ist. Die erste Seite 72 weist hierbei einen ersten Bereich 76 auf, in dem Microeinschnitte 80 ausgestaltet sind, und weist einen zweiten Bereich 78 mit einer definierten Rauigkeit auf. Die Bereiche 76, 78 sind hierbei rechteckförmig ausgestaltet, wobei der zweite Bereich 78 zwischen dem ersten Bereich 76 und der Lamellenoberseite 68 angeordnet ist.

Das Oberflächenelement 64 besitzt vorzugsweise eine rechteckförmige Kontur und weist eine erste Länge L5 auf, die gleich einer Länge der Lamellenbasis 70 ist, und eine zweite Länge L6, die abhängig ist von einem Abstand zu einem benachbarten Einsatzelement, wenn das Einsatzelement 60 in ein Formsegment der Vulkanisierstation eingesetzt ist, und zu Längsrillen und Querrillen des zu erzeugenden Laufstreifenprofils. Die Bereiche 76, 78 besitzen in diesem Ausführungsbeispiel in etwa gleiche Längen L7, L8, die hier die Hälfte der zweiten Länge L6 betragen.

Das Einsatzelement 60 besitzt in diesem Ausführungsbeispiel zusätzlich an der Lamellenoberseite 68 eine Verbreiterung in Form einer dreieckförmigen Kante 82, durch die mit dem Lamellenelement 62 ein Feineinschnitt mit einer Fase in dem Laufstreifenprofil des Fahrzeugreifens herstellbar ist.

### Bezugszeichenliste

- 1: Lamellenelement
- 2: Lamellenunterseite
- 4: Lamellenoberseite
- 6: Lamellenbasis
- 10: Einsatzelement
- 12: Lamellenelement
- 14: Oberflächenelement
- 16: Lamellenunterseite
- 18: Lamellenoberseite
- 20: Lamellenbasis
- 22, 24: Seiten des Oberflächenelements 14
- 30: Einsatzelement
- 32: Lamellenelement
- 34, 36: Oberflächenelemente
- 38: Lamellenunterseite
- 40: Lamellenoberseite
- 42: Lamellenbasis
- 44, 46: erste Seiten des Oberflächenelements 34
- 48, 50: zweite Seiten des Oberflächenelements 36
- 52, 54: Bereiche mit einer glatten Oberfläche
- 56, 58: Bereiche mit einer rauen Oberfläche
- 60: Einsatzelement
- 62: Lamellenelement
- 64: Oberflächenelement
- 66: Lamellenunterseite
- 68: Lamellenoberseite
- 70: Lamellenbasis
- 72: erste Seite des Oberflächenelements 64
- 74: zweite Seite des Oberflächenelements 64
- 76, 78: Bereiche der erste Seite des Oberflächenelements 64
- 80: Microeinschnitte
- 82: Kante
- L1, L2: Längen des Oberflächenelements 14
- L3, L4: Längen der Oberflächenelemente 34, 36
- L5, L6: Längen des Oberflächenelements 64
- L7, L8: Längen der Bereiche 76, 78
- T: Tiefe
- D: Dicke
- B: Breite

## Patentansprüche

1. Einsatzelement (10, 30, 60) zur Herstellung eines Laufstreifenprofils eines Fahrzeugreifens in einer Vulkanisierstation, wobei:
das Einsatzelement (10, 30, 60) mit einem SLM (Selective Laser Manufacturing)-Verfahren hergestellt ist;
das Einsatzelement (10, 30, 60) ein Lamellenelement (12, 32, 62) für eine Erzeugung eines Einschnitts in dem Laufstreifenprofil und ein Oberflächenelement (14, 34, 36, 64) beinhaltet; und
das Oberflächenelement (14, 34, 36, 64) eine erste Seite (22, 44, 46, 72) mit einer rauen Oberfläche zur Erzeugung einer Rauigkeit des Laufstreifenprofils aufweist.

2. Einsatzelement (10, 30, 60) gemäß Anspruch 1, wobei:
das Lamellenelement (12, 32, 62) eine Lamellenunterseite (16, 38, 66), eine Lamellenoberseite (18, 40, 68) und eine Lamellenbasis (20, 42, 70) aufweist;
das Oberflächenelement (14, 34, 36, 64) und die Lamellenbasis (20, 42, 70) an der Lamellenoberseite (18, 40, 68) angeordnet sind; und
das Lamellenelement (12, 32, 62) mit der Lamellenbasis (20, 42, 70) in eine Vertiefung eines Formsegments der Vulkanisierstation einsetzbar ist.

3. Einsatzelement (10, 30, 60) gemäß Anspruch 2, wobei die erste Seite (22, 44, 46, 72) einem Laufstreifen des Fahrzeugreifens zugeordnet ist, und wobei das Oberflächenelement (14, 34, 36, 64) eine zweite Seite (24, 48, 50, 74) aufweist, die einer Oberfläche des Formsegments zugeordnet ist, wenn das Einsatzelement in die Vertiefung des Formsegments eingesetzt ist.

4. Einsatzelement (10, 30, 60) gemäß Anspruch 3, wobei die zweite Seite (24, 48, 50, 74) eine glatte Oberfläche aufweist.

5. Einsatzelement (30) nach einem der Ansprüche 2 bis 4, wobei die erste Seite (44, 46) des Oberflächenelements (34) einen Bereich (56, 58) aufweist, der mit einer definierten Rauigkeit ausgestaltet ist, und einen Bereich (52, 54), der mit einer glatten Oberfläche ausgestaltet ist.

6. Einsatzelement (30) gemäß Anspruch 5, wobei der Bereich (52, 54) mit der glatten Oberfläche zwischen dem Bereich (56, 58) mit der definierten Rauigkeit und der Lamellenoberseite (40) angeordnet ist.

7. Einsatzelement (30) gemäß Anspruch 5 oder 6, wobei die zwei Bereiche (52, 54, 56, 58) rechteckförmig ausgestaltet sind.

8. Einsatzelement (10) nach einem der Ansprüche 1 bis 4, wobei die Oberfläche der ersten Seite (22) des Oberflächenelements (14) vollständig mit einer definierten Rauigkeit ausgestaltet ist.

9. Einsatzelement (60) nach einem der Ansprüche 1 bis 4, wobei die erste Seite (72) des Oberflächenelements (64) einen ersten Bereich (76) enthält, der Microeinschnitte (80) aufweist.

10. Einsatzelement (60) gemäß Anspruch 9, wobei die erste Seite (72) des Oberflächenelements (64) einen zweiten Bereich (78) mit einer definierten Rauigkeit aufweist.

11. Einsatzelement (60) gemäß Anspruch 9 oder 10, wobei die zwei Bereiche (76, 78) rechteckförmig ausgestaltet sind und der zweite Bereich (78) zwischen dem ersten Bereich (76) und der Lamellenoberseite (68) angeordnet ist.

12. Einsatzelement (60) nach einem der Ansprüche 2 bis 11, wobei das Einsatzelement (60) an der Lamellenoberseite (68) eine Verbreiterung (82) aufweist, durch die mit dem Lamellenelement (62) ein Feineinschnitt mit einer Fase in dem Laufstreifenprofil des Fahrzeugreifens herstellbar ist.

13. Einsatzelement (30) nach einem der Ansprüche 1 bis 11, wobei das Einsatzelement (30) ein zweites Oberflächenelement (36) beinhaltet, das eine erste Seite (46) mit einer rauen Oberfläche aufweist zur Erzeugung einer Rauigkeit des Laufstreifenprofils, und wobei die beiden Oberflächenelemente (34, 36) um 180° gegeneinander an gegenüberliegenden Seiten des Einsatzelements (30) angeordnet sind.

14. Einsatzelement (30) gemäß Anspruch 13, wobei die erste Seite (46) des zweiten Oberflächenelements (36) einen Bereich (54) mit einer glatten Oberfläche und einen Bereich (58) mit einer definierten Rauigkeit aufweist.

15. Fahrzeugreifen, wobei der Fahrzeugreifen mit einem Einsatzelement (10, 30, 60) nach einem der vorhergehenden Ansprüche hergestellt ist.
